# EUROPÄISCHE PATENTSCHRIFT

(11) **EP 1 604 848 B1**
(45) Veröffentlichungstag und Bekanntmachung des Hinweises auf die Patenterteilung: **24.08.2011**
(21) Anmeldenummer: 05012263.9
(22) Anmeldetag: 07.06.2005
(51) Int. Cl.: B60H 1/00

(54) **Klimaanlage für ein Kraftfahrzeug**
Air conditioning unit for a vehicle
Climatisation pour véhicule

(30) Priorität: 07.06.2004 DE 102004027689
(43) Veröffentlichungstag der Anmeldung: 14.12.2005
(73) Patentinhaber: Denso Automotive Deutschland GmbH, 85386 Eching (DE)
(72) Erfinder: Matsui, Kenji, 81925 München (DE); Suda, Kotara, 81673 München (DE); Simmet, Wolfgang, 85540 Haar (DE)
(74) Vertreter: Klingseisen, Franz

(56) Entgegenhaltungen:
- FR-A- 2 778 152
- US-A- 5 042 566
- US-A1- 2004 069 484
- US-B1- 6 568 468

## Beschreibung

Die Erfindung betrifft eine Klimaanlage für ein Kraftfahrzeug nach dem Oberbegriff des Anspruchs 1.

Eine Klimaanlage dieser Art ist aus US-A-5 042 566 bekannt, bei der stromauf des Wärmetauschers eine Steuerklappe vorgesehen ist, durch die vom Verdampfer kommende Kaltluft gegenüber dem Wärmetauscher abgesperrt werden kann. Stromab des Wärmetauschers ist für den zum Frontbereich führenden Teilkanal eine Steuerklappe vorgesehen, durch die in einer Zwischenstellung Warmluft und Kaltluft in den zum Frontbereich führenden Teilkanal geleitet wird.

Aus US-A-6 568 468 ist eine Klimaanlage für ein Kraftfahrzeug bekannt, bei der zwischen Verdampfer und Wärmetauscher ein als Flächenelement mit einer Durchtrittsöffnung ausgebildetes Steuerelement vorgesehen ist, durch das der Wärmetauscher gegenüber der vom Verdampfer kommenden Kaltluft ab gesperrt werden kann.

Bei solchen Klimaanlage werden zwischen Verdampfer, der durchströmende Luft kühlt, und Wärmetauscher, der durchströmende Luft erwärmt, Mischelemente in Form von Klappen vorgesehen, durch deren Einstellung die kalten und warmen Luftströme entsprechend der gewünschten Temperatur gemischt werden, bevor sie dem Fahrgastraum zugeführt werden. Hierfür ist ein gewisser Aufwand erforderlich, wobei je nach Einstellung der Steuerklappen die Strömungsrichtung der kalten und warmen Luftströme relativ zueinander verändert wird, wodurch sich unterschiedliche Mischungsbedingungen ergeben. Durch die Anordnung der Steuerklappen zwischen Verdampfer und Wärmetauscher ist es auch nicht möglich, im Front- und Fondbereich des Fahrgastraumes sehr unterschiedliche Temperaturbereiche einzustellen.

Aufgabe der Erfindung ist es, eine solche Klimaanlage so auszubilden, dass im Fond- und Frontbereich des Fahrgastraumes sehr unterschiedliche Temperaturbereiche eingestellt werden können. Eine weitere Aufgabe der Erfindung ist es, den Aufbau einer Klimaanlage dieser Art zu vereinfachen und die Wirksamkeit der Mischung der Luftströme zu verbessern.

Erfindungsgemäß wird in Strömungsrichtung hinter dem Wärmetauscher wenigstens eine Steuereinrichtung für die Mischung der Luftströme in der Form eines verstellbaren, mit einer Durchtrittsöffnung versehenen Flächenelementes vorgesehen, so dass aus dem Verdampfer kalte Luft und aus dem Wärmetauscher warme Luft ungestört bis zum Steuerelement strömt und die beiden Luftströme unmittelbar vor dem Eintritt in den zum Frontbereich des Fahrgastraumes führenden Luftkanal gemischt werden. Hierdurch kann für den Frontbereich beispielsweise maximale Kaltluftzufuhr und für den Fondbereich maximale Warmluftzufuhr und umgekehrt eingestellt werden. Bei Verwendung eines flexiblen, mit einer Durchtrittsöffnung versehenen Flächenelementes als Steuereinrichtung für den Frontbereich wird zudem erreicht, dass unabhängig vom eingestellten Mischungsverhältnis der kalte und der warme Luftstrom unter gleichem Strömungswinkel im Mischbereich aufeinander treffen, so dass bei kompaktem Aufbau immer gleiche Mischbedingungen vorliegen, wodurch die Mischung auf engem Raum verbessert wird.

Beispielsweise Ausführungsformen der Erfindung werden nachfolgend anhand der Zeichnung näher erläutert. Es zeigen
- Fig. 1: eine schematische Schnittansicht einer Klimaanlage mit Verdampfer und Wärmetauscher,
- Fig. 2 bis 4: verschiedene Betriebszustände bzw. Mischungsverhältnisse, und
- Fig. 5: eine Ausführungsform mit einstellbarer Durchtrittsöffnung am Steuerelement,

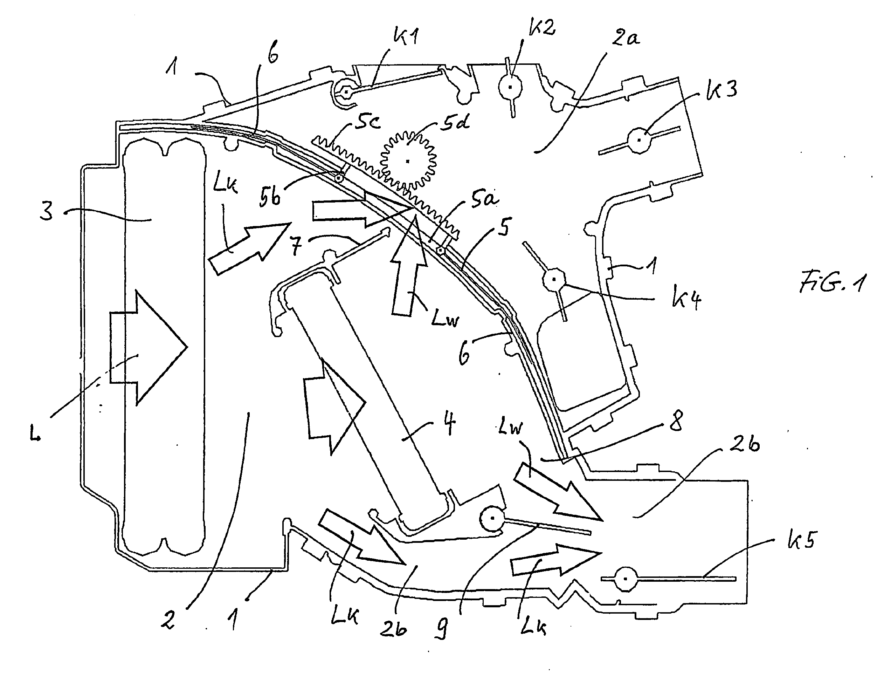

In Fig. 1 ist mit 1 das Gehäuse einer Klimaanlage bezeichnet, das einen Hauptkanal 2 umgibt, in dem stromaufwärts bzw. am Kanaleinlass ein von Luft L durchströmter Verdampfer 3, der sich im Wesentlichen über den ganzen Querschnitt des Hauptkanals erstreckt, und stromabwärts von diesem ein von Luft durchströmter Wärmetauscher 4 angeordnet ist, der sich nur über einen Teilbereich des Querschnitts des Hauptkanals 2 erstreckt. Die durch den Verdampfer 3 strömende Luft wird von diesem gekühlt und die durch den Wärmetauscher 4 strömende Luft wird von diesem erwärmt, wobei durch den Wärmetauscher 4 ein Teil des Luftstroms strömt, der vom Verdampfer 3 kommt.

An der Oberseite des Gehäuses 1 zweigt ein Teilkanal 2a ab, der zum Armaturenbereich des Fahrgastraums führt, wobei verschiedene Klappen K für die Steuerung der Luftzufuhr vorgesehen sind. Die Klappen K1 und K2 sind für den Luftaustritt nahe der Windschutzscheibe vorgesehen, die Klappe K3 für die Anströmung der Passagiere auf den Vordersitzen und die Klappe K4 für die Luftzufuhr im Fußbereich auf den Vordersitzen. Vor der Unterseite bzw. vor dem unteren Ende des Wärmetauschers 4 zweigt ein Teilkanal 2b aus dem Hauptkanal 2 ab, der zum Fußbereich der Fondpassagiere führt und in dem eine Steuerklappe K5 zum Öffnen und Schließen dieses Teilkanals 2b angeordnet ist.

Der Wärmetauscher 4 ist in einem Abstand von dem senkrecht angeordneten Verdampfer 3 in Richtung auf diesen geneigt im Hauptkanal 2 angeordnet, wobei vom oberen Ende des Verdampfers 3 in einem Bogen zum unteren Ende des Wärmetauschers 4 in einem Abstand von diesem eine Führungsbahn 6 für ein flexibles Flächenelement 5 verläuft, das eine Durchtrittsöffnung 5a aufweist, die von einem Rahmen 5b umgeben sein kann. Durch eine Verstelleinrichtung, beispielsweise eine mit dem Flächenelement 5 verbundene Zahnstange 5c, mit der ein Zahnrad 5d in Eingriff steht, kann das Flächenelement 5 längs der Führungsbahn 6 verstellt werden. Die Führungsbahn 6 mit dem Flächenelement 5 bildet eine bogenförmige Begrenzungswand des Hauptkanals 2.

Vom oberen Ende des Wärmetauschers 4 erstreckt sich eine Trennwand 7 in Richtung auf das flexible Flächenelement 5, durch die der kalte Luftstrom vom warmen Luftstrom im Bereich des durch das Flächenelement 5 gebildeten Steuerelementes getrennt wird. Durch Pfeile Lw ist die Strömung des warmen Luftstroms und durch Pfeile Lk der kalte Luftstrom in Fig. 1 angedeutet. Zwischen dem unteren Ende des Wärmetauschers 4 und dem unteren Ende der Führungsbahn 6 bzw. der durch diese gebildeten Begrenzungswand ist eine Durchtrittsöffnung 8 für den warmen Luftstrom Lw ausgebildet, die in den Teilkanal 2b mündet. Eine Steuerklappe 9 ist auf einer Seite der Durchtrittsöffnung 8 derart verschwenkbar gelagert, dass sie von der Durchtrittsöffnung 8 weg in den Teilkanal 2b bewegt werden kann, wobei die Mischung von warmer und kalter Luft in den zum Fondbereich führenden Teilkanal 2b einstellbar ist.

Die Trennwand 7 am oberen Ende des Wärmetauschers 4 erstreckt sich bis kurz vor die Ebene des Flächenelementes 5, wobei die Stellung der Durchtrittsöffnung 5a relativ zur Trennwand 7 in Fig. 1 der Stellung entspricht, in der die Durchtrittsöffnung 5a durch die Trennwand 7 in zwei etwa gleich große Teilöffnungen für kalte und warme Luft unterteilt wird, so dass sich ein Mischungsverhältnis von etwa 50 % kalter und etwa 50 % warmer Luft für den in den Teilkanal 2a einströmenden Luftstrom ergibt.

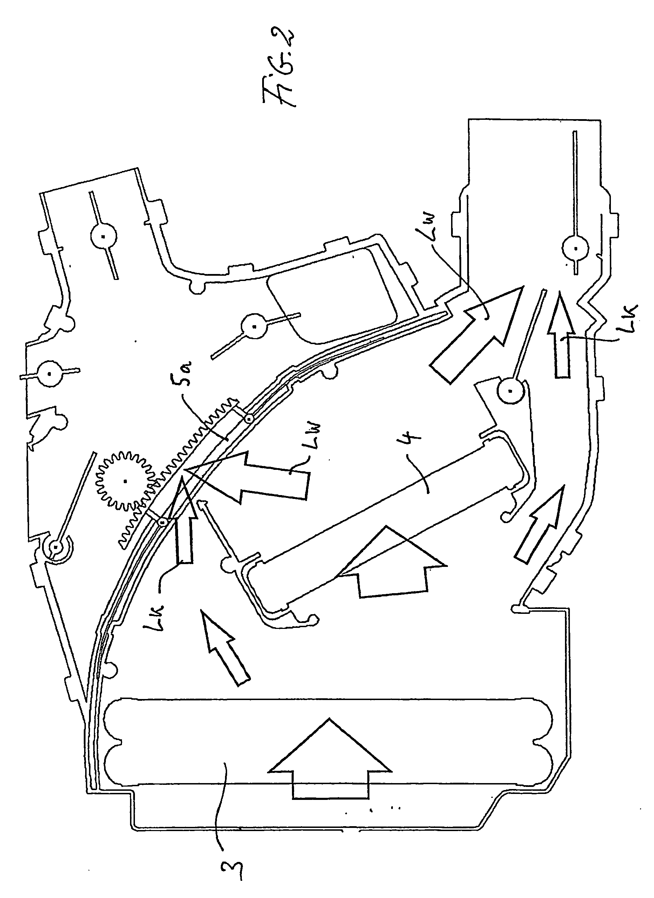

Wie Fig. 1 zeigt, treffen die beiden Luftströme Lk und Lw im Bereich der Durchtrittsöffnung 5a in einem durch die Geometrie der Anordnung vorgegebenen Winkel von etwa 90° aufeinander, so dass sich eine gute Durchmischung auf engem Raum ergibt. Hierbei bildet die durch die Führung 6 mit dem Flächenelement 5 gebildete Begrenzungswand des Hauptkanals 2 einen spitzen Winkel mit der Trennwand 7 auf der Seite des kalten Luftstroms Lk, während auf der anderen Seite der Trennwand 7 diese mit der Begrenzungswand einen stumpfen Winkel bildet. Fig. 2 zeigt eine Stellung des Flächenelements 5, in der die Durchtrittsöffnung 5a durch die stationäre Trennwand 7 etwa im Verhältnis 30 : 70 unterteilt ist, so dass etwa 30 % kalte Luft und 70 % warme Luft durch die Durchtrittsöffnung 5a strömen. Wie die Pfeile in Fig. 2 zeigen, ändert sich der Auftreffwinkel der beiden Luftströme Lk und Lw hierbei nicht, so dass gleich gute Mischbedingungen auch bei verändertem Mischungsverhältnis vorliegen.

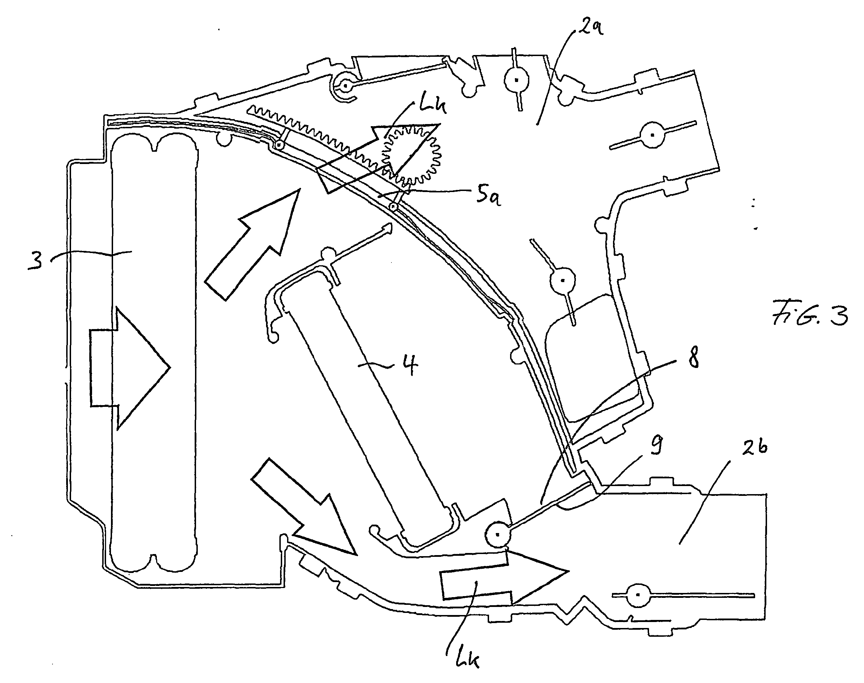

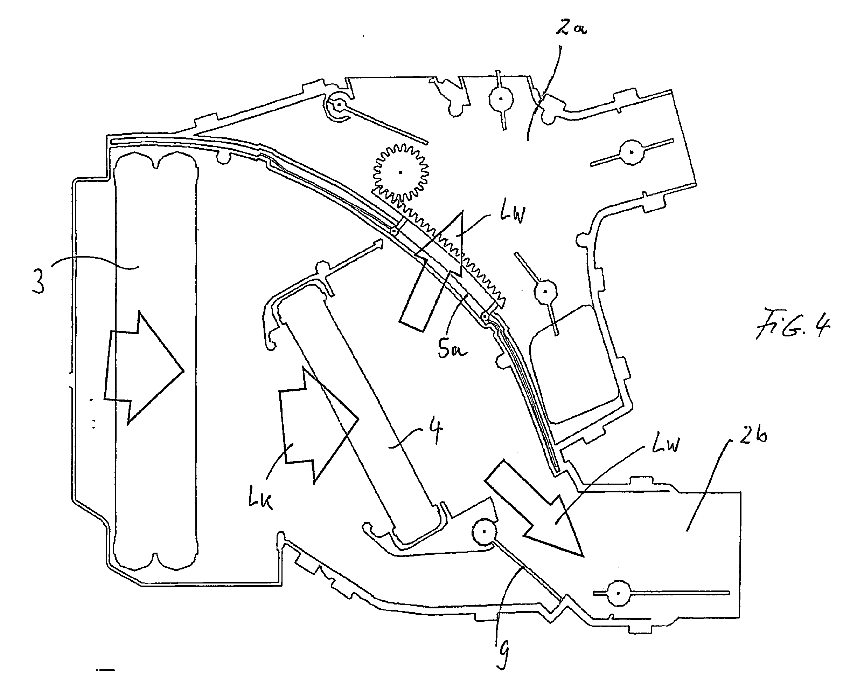

Fig. 3 und 4 zeigen Extremeinstellungen, wobei nach Fig. 3 die Durchtrittsöffnung 5a auf die Seite des kalten Luftstroms Lk verschoben ist und nur von Kaltluft durchströmt wird, wobei die Steuerklappe 9 für den Fondbereich die Durchtrittsöffnung 8 verschließt und ebenfalls nur Kaltluft Lk in den Teilkanal 2b einströmen lässt. Der Luftaustritt vom Wärmetauscher 4 ist hierbei nach oben zum Teilkanal 2a und unten zum Teilkanal 2b geschlossen. Wird in dieser Stellung die Steuerklappe 9 umgestellt, so dass nur warme Luft Lw vom Wärmetauscher 4 in den Teilkanal 2b zum Fondbereich eintreten kann, so wird im Fondbereich maximale Wärme zugeführt, während im Frontbereich maximale Kaltluft Lk zugeführt wird. Fig. 4 zeigt eine Stellung, in der der Zutritt von Kaltluft Lk vom Verdampfer 3 in die Teilkanäle 2a und 2b abgesperrt ist und nur Warmluft Lw vom Wärmetauscher 4 nach unten in den Fondbereich und nach oben in den Frontbereich eingeleitet wird.

Wie diese Darstellungen zeigen, können unabhängig voneinander sehr unterschiedliche Temperaturbereiche im Front- und Fondbereich des Fahrgastraumes eingestellt werden. Im Teilkanal 2b für die Temperierung des rückwärtigen Fahrgastraumes kann eine einfache Klappensteuerung wie dargestellt verwendet werden, weil durch die Länge des Luftkanals 2b bis zum Fondbereich eine ausreichende Durchmischung der beiden Luftströme stattfinden kann. Für die Temperierung des Frontbereichs des Fahrgastraumes wird dagegen durch das Steuerelement in Form eines flexiblen Flächenelementes 5 eine gute Durchmischung von kalter und warmer Luft auf engstem Raum erreicht.

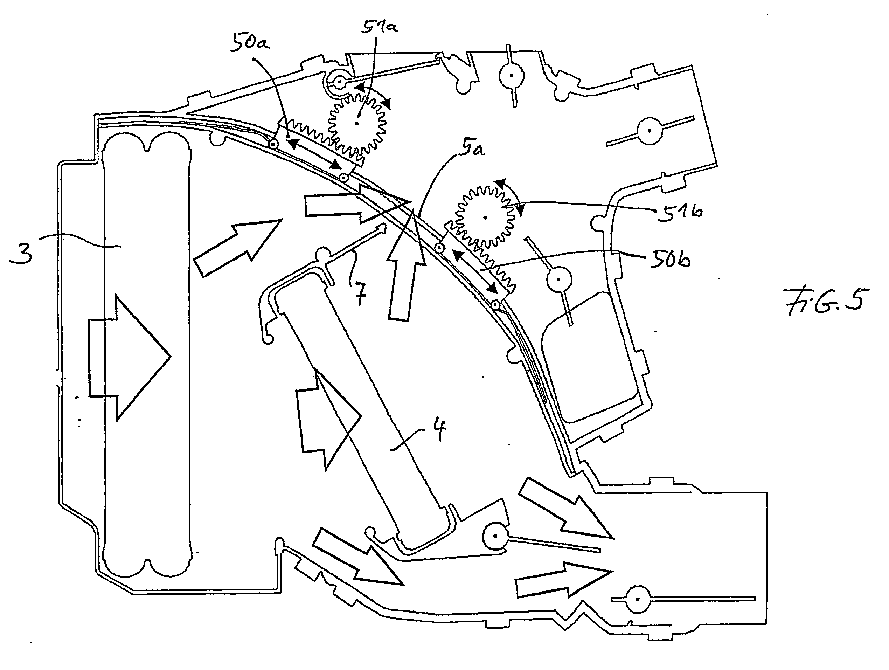

Fig. 5 zeigt eine abgewandelte Ausführungsform, bei der zwei voneinander getrennte flexible Flächenelemente 50a und 50b als Steuerschieber vorgesehen sind, die relativ zueinander beispielsweise über eine an den Flächenelementen 50a und 50b angebrachte Zahnleiste mittels eines Zahnrades 51 a bzw. 5 1 b verstellbar sind, um die Größe der Durchtrittsöffnung 5a einzustellen. Hierdurch ist es möglich, beispielsweise auf der linken Fahrgastseite im Frontbereich eine größere Luftdurchtrittsöffnung 5a einzustellen als auf der rechten Seite und umgekehrt.

Bei dieser in Fig. 5 wiedergegebenen Ausführungsform mit zwei voneinander getrennten Einstelleinrichtungen kann nicht nur die Größe der Durchtrittsöffnung 5a eingestellt werden, sondern auch deren Verlagerung relativ zur Trennwand 7, indem die beiden Verstelleinrichtungen gemeinsam um den gleichen Betrag in eine Richtung verstellt werden, so dass die Durchtrittsöffnung 5a insgesamt längs der bogenförmigen Begrenzungswand relativ zur Trennwand 7 verlagert wird. Ebenso ist es möglich, eine gesonderte, nicht dargestellte Verstelleinrichtung vorzusehen, mittels der die beiden Flächenelemente 50a und 50b gemeinsam längs der Führungsbahn 6 verstellt werden und über die beiden dargestellten Einstelleinrichtungen 51 a, 51 b nur die Größe der Durchtrittsöffnung 5a eingestellt wird.

Weiterhin sind verschiedene Abwandlungen der wiedergegebenen Bauform möglich. So kann beispielsweise die Trennwand 7 in Fig. 1 im Wesentlichen entfallen, wenn die aus den Elementen 5 und 6 gebildete, bogenförmige Begrenzungswand nahe am oberen Ende des Wärmetauschers 4 verläuft, sodass das obere Ende des Wärmetauschers 4 im Wesentlichen die Begrenzung zwischen warmem Luftstrom Lw und kaltem Luftstrom Lk im Bereich der Durchtrittsöffnung 5a bildet.

Anstelle der Bogenform der Begrenzungswand mit den Elementen 5, 6 kann auch eine abgestufte Begrenzungswand derart vorgesehen werden, dass ein Teil der Begrenzungswand zwischen oberer Wand des Gehäuses 1 und oberem Ende des Wärmetauschers 4 und der andere Teil der Begrenzungswand zwischen oberem Ende des Wärmetauschers 4 und gegenüberliegender Begrenzungswand des Gehäuses 1 bzw. bis zum Rand der Durchtrittsöffnung 8 verläuft.

Auch kann die verschwenkbare Steuerklappe 9, welche die Durchtrittsöffnung 8 vom Wärmetauscher 4 zum Teilkanal 2b einstellt, durch ein anderes Steuerelement, beispielsweise eine verschiebbare Klappe ersetzt werden. Zweckmäßigerweise wird ein verschiebbares Steuerelement so angeordnet, dass durch das Steuerelement zugleich auch der Abschnitt des Teilkanals 2b in seinem Durchtrittsquerschnitt eingestellt werden kann, der vor dem Wärmetauscher 4 aus dem Hauptkanal 2 abzweigt. Bei der dargestellten Bauform ist die Steuerklappe 9 aus dem Bereich der Durchtrittsöffnung 8 in den Querschnittsbereich des Teilkanals 2b verschwenkbar, sodass dieser vollständig absperrbar ist, wie Fig. 4 zeigt.

## Patentansprüche

1. Klimaanlage für ein Kraftfahrzeug, umfassend einen von Luft durchströmten Verdampfer (3) und einen Wärmetauscher (4) in einem Lufthauptkanal (2), von dem ein Teilkanal (2a) zum Frontbereich und ein Teilkanal (2b) zum Fondbereich des Fahrgastraumes abzweigt,
wobei der stromabwärts vom Verdampfer (3) angeordnete Wärmetauscher (4) einen Teilbereich des Lufthauptkanals (2) einnimmt und die vom Verdampfer (3) kommende Luft den Wärmetauscher (4) durchströmt,
wobei wenigstens ein erstes Steuerelement (5) **stromabwärts vom Wärmetauscher (4)** vorgesehen ist, um einerseits den vom Verdampfer (3) und andererseits den vom Wärmetauscher (4) kommenden Luftstrom in den zum Frontbereich des Fahrgastraumes führenden Teilkanal (2a) einzustellen, sowie
ein zweites Steuerelement (9) **stromabwärts vom Wärmetauscher (4),** um einerseits den vom Verdampfer (3) und andererseits den vom Wärmetauscher (4) kommenden Luftstrom in den zum Fondbereich des Fahrgastraumes führenden Teilkanal (2b) einzustellen,
**dadurch gekennzeichnet,**
**dass** das erste, für den Frontbereich vorgesehene Steuerelement (5) als in seiner Ebene verstellbares, mit einer Durchtrittsöffnung (5a) versehenes Flächenelement ausgebildet und
relativ zu dem Ende des Wärmetauschers (4), das an dem zum Frontbereich des Fahrgastraumes führenden Teilkanal (2a) liegt, so verstellbar ist, dass der vom Wärmetauscher (4) austretende Luftstrom (Lw) und der vom Verdampfer (3) kommende Luftstrom (Lk) im Bereich der Durchtrittsöffnung (5a) in einem Winkel von etwa 90° aufeinander treffen.

2. Klimaanlage nach Anspruch 1, wobei der Verdampfer (3) im Wesentlichen quer zum Hauptkanal (2) angeordnet ist und dessen Querschnitt im Wesentlichen ausfüllt, während der Wärmetauscher (4) stromabwärts in einem Abstand vom Verdampfer (3) schräg zu diesem so angeordnet ist, dass das obere Ende des Wärmetauschers (4) einen geringeren Abstand vom Verdampfer (3) hat als das untere Ende des Wärmetauschers (4).

3. Klimaanlage nach Anspruch 1 oder 2, wobei der Teilkanal (2b) zum Fondbereich des Fahrgastraumes vor dem unteren Ende oder am unteren Ende des Wärmetauschers (4) aus dem Hauptkanal (2) abzweigt.

4. Klimaanlage nach einem oder mehreren der vorhergehenden Ansprüche, wobei eine Begrenzungswand von dem oberen Ende des Verdampfers (3) zum stromabwärtigen unteren Ende des Wärmetauschers (4) derart verläuft, dass das untere Ende des Wärmetauschers (4) einen Abstand von der Begrenzungswand hat, um eine Durchtrittsöffnung (8) für den vom Wärmetauscher (4) kommenden Luftstrom (Lw) in den zum Fondbereich führenden Teilkanal (2b) zu bilden, und wobei das wenigstens eine Steuerelement (5) zur Steuerung des Luftstroms in den zum Frontbereich führenden Teilkanal (2a) in dieser Begrenzungswand angeordnet ist.

5. Klimaanlage nach Anspruch 4, wobei das Flächenelement (5) längs der Begrenzungswand in einer Führungsbahn (6) relativ zum oberen Ende des Wärmetauschers (4) oder relativ zu einer Trennwand (7) verstellbar ist, die den vom Wärmetauscher (4) austretenden Luftstrom (Lw) von dem vom Verdampfer (3) kommenden Luftstrom (Lk) im Bereich vor dem Flächenelement (5) trennt.

6. Klimaanlage nach einem der vorhergehenden Ansprüche, wobei das Flächenelement (5) aus relativ zueinander verstellbaren Abschnitten (50a, 50b) ausgebildet ist, durch die die Durchtrittsöffnung (5ä) in ihrer Größe einstellbar ist.

7. Klimaanlage nach Anspruch 6, wobei die relativ zueinander verstellbaren Abschnitte (50a, 50b) unabhängig von ihrer Relativstellung zueinander durch eine Verstelleinrichtung gemeinsam verstellbar sind.

8. Klimaanlage nach Anspruch 4, wobei eine Steuerklappe (9) an der Durchtrittsöffnung (8) angeordnet ist, durch die der vom Wärmetauscher (4) kommende Luftstrom in den Teilkanal (2b) eingestellt wird.

9. Klimaanlage nach Anspruch 8, wobei die Steuerklappe (9) in den zum Fondbereich führenden Teilkanal (2b) verstellbar bzw. verschwenkbar ist, sodass der vor dem Wärmetauscher (4) vom Hauptkanal (2) abzweigende Abschnitt des Teilkanals (2b) durch die Steuerklappe (9) absperrbar ist.

## Claims

1. Air conditioner for a vehicle, comprising an evaporator (3) through which air passes and a heat exchanger (4) in a main air passage (2), from which a partial passage (2a) branches off to the front area and a partial passage (2b) branches off to the rear area of the passenger compartment,
wherein the heat exchanger (4) arranged downstream from the evaporator (3) takes up a partial area of the main air passage (2) and the air coming from the evaporator (3) passes through the heat exchanger (4),
wherein at least a first control member (5) is provided downstream from the heat exchanger (4), to adjust the airflow coming from the evaporator (3) on the one hand and the airflow coming from the heat exchanger (4) on the other hand in the partial passage (2a) leading to the front area of the passenger compartment, and
a second control member (9) downstream from the heat exchanger (4), to adjust the airflow coming from the evaporator (3) on the one hand and the airflow coming from the heat exchanger (4) on the other hand in the partial passage (2b) leading to the rear area of the passenger compartment,
**characterised in that**
the first control member (5), provided for the front area, is formed as a flat element which is displaceable in its plane and is provided with a throughhole (5a) and
is displaceable relative to the end of the heat exchanger (4), which end is located at the partial passage (2a) leading to the front area of the passenger compartment, such that the airflow (Lw) emerging from the heat exchanger (4) and the airflow (Lk) coming from the evaporator (3) meet one another in the area of the throughhole (5a) at an angle of approximately 90°.

2. Air conditioner according to claim 1, wherein the evaporator (3) is arranged substantially transverse to the main passage (2) and substantially fills the cross-section thereof, while the heat exchanger (4) is arranged downstream at a distance from the evaporator (3) and inclined thereto, such that the upper end of the heat exchanger (4) is at a shorter distance from the evaporator (3) than the lower end of the heat exchanger (4).

3. Air conditioner according to claim 1 or 2, wherein the partial passage (2b) branches off from the main passage (2) to the rear area of the passenger compartment before the lower end or at the lower end of the heat exchanger (4).

4. Air conditioner according to one or a plurality of the preceding claims, wherein a delimiting wall extends from the upper end of the evaporator (3) to the downstream lower end of the heat exchanger (4) such that the lower end of the heat exchanger (4) is at a distance from the delimiting wall, to form a throughhole (8) for the airflow (Lw) coming from the heat exchanger (4) into the partial passage (2b) leading to the rear area, and wherein the at least one control member (5) is arranged in this delimiting wall for controlling the airflow into the partial passage (2a) leading to the front area.

5. Air conditioner according to claim 4, wherein the flat element (5) is displaceable along the delimiting wall in a guideway (6) relative to the upper end of the heat exchanger (4) or relative to a partition wall (7) which separates the airflow (Lw) emerging from the heat exchanger (4) from the airflow (Lk) coming from the evaporator (3) in the area in front of the flat element (5).

6. Air conditioner according to one of the preceding claims, wherein the flat element (5) is formed from portions (50a, 50b) which are displaceable relative to one another, by means of which the throughhole (5a) is adjustable in size.

7. Air conditioner according to claim 6, wherein the portions (50a, 50b), which are displaceable relative to one another, are jointly displaceable by means of a displacing means, independent of their relative position to one another.

8. Air conditioner according to claim 4, wherein a control flap (9) is arranged at the throughhole (8), by means of which the airflow coming from the heat exchanger (4) into the partial passage (2b) is adjusted.

9. Air conditioner according to claim 8, wherein the control flap (9) is displaceable or pivotable into the partial passage (2b) leading to the rear area, so that the portion of the partial passage (2b) branching off from the main passage (2) in front of the heat exchanger (4) is blockable by means of the control flap (9).

## Revendications

1. Climatiseur pour un véhicule, comprenant un évaporateur (3) par lequel de l'air passe et un échangeur de chaleur (4) dans un conduit d'air principal (2), duquel un conduit partiel (2a) bifurque à la zone en avant et un conduit partiel (2b) bifurque à la zone en arrière de l'habitacle,
dans lequel l'échangeur de chaleur (4) disposé en aval de l'évaporateur (3) occupe une zone partielle du conduit d'air principal (2) et l'air venant de l'évaporateur (3) passe par l'échangeur de chaleur (4),
dans lequel au moins un premier élément de contrôle (5) est prévu en aval de l'échangeur de chaleur (4) pour ajuster d'une part l'écoulement d'air venant de l'évaporateur (3) et d'autre part l'écoulement d'air venant de l'échangeur de chaleur (4), entrant dans le conduit partiel (2a) menant à la zone en avant de l'habitacle, et
un deuxième élément de contrôle (9) est prévu en aval de l'échangeur de chaleur (4) pour ajuster d'une part l'écoulement d'air venant de l'évaporateur (3) et d'autre part l'écoulement d'air venant de l'échangeur de chaleur (4), entrant dans le conduit partiel (2b) menant à la zone en arrière de l'habitacle,
**caractérisé en ce que**
le premier élément de contrôle (5), prévu pour la zone en avant, est formé comme un élément plat qui est ajustable dans son plan et prévu avec un trou d'interconnexion (5a) et
ajustable par rapport au bout de l'échangeur de chaleur (4), qui est situé au conduit partiel (2a) menant à la zone en avant de l'habitacle de telle manière que l'écoulement d'air (Lw) sortant de l'échangeur de chaleur (4) et l'écoulement d'air (Lk) venant de l'évaporateur (3) se rencontrent dans la zone du trou d'interconnexion (5a) sous un angle d'approximativement 90°.

2. Climatiseur selon la revendication 1, dans lequel l'évaporateur (3) est disposé essentiellement en travers du conduit principal (2) et remplit essentiellement la section transversale du conduit principal, tandis que l'échangeur de chaleur (4) est disposé en aval à distance de l'évaporateur (3) et incliné à ceci de telle manière que le bout supérieur de l'échangeur de chaleur (4) a moins de distance à l'évaporateur (3) que le bout inférieur de l'échangeur de chaleur (4).

3. Climatiseur selon la revendication 1 ou 2, dans lequel le conduit partiel (2b) bifurque du conduit principal (2) à la zone en arrière de l'habitacle avant le bout inférieur, ou à le bout inférieur, de l'échangeur de chaleur (4).

4. Climatiseur selon l'une des revendications précédentes ou selon une pluralité de celles-ci, dans lequel une cloison de délimitation s'étend du bout supérieur de l'évaporateur (3) au bout inférieur de l'échangeur de chaleur (4), qui est en aval, de telle manière que le bout inférieur de l'échangeur de chaleur (4) a une distance à la cloison de délimitation pour former un trou d'interconnexion (8) pour l'écoulement d'air (Lw) venant de l'échangeur de chaleur (4), entrant dans le conduit partiel (2b) menant à la zone en arrière, et dans lequel l'élément de contrôle, dont il y a au moins un, est disposé dans cette cloison de délimitation pour contrôler l'écoulement d'air entrant dans le conduit partiel (2a) menant à la zone en avant.

5. Climatiseur selon la revendication 4, dans lequel l'élément plat (5) est déplaçable le long de la cloison de délimitation dans un chemin de guidage (6) par rapport au bout supérieur de l'échangeur de chaleur (4) ou par rapport à une cloison de séparation (7) qui sépare l'écoulement d'air (Lw) sortant de l'échangeur de chaleur (4) de l'écoulement d'air (Lk) venant de l'évaporateur (3) dans la zone en avant de l'élément plat (5).

6. Climatiseur selon l'une des revendications précédentes, dans lequel l'élément plat (5) est formé des parties (50a, 50b) déplaçables l'une par rapport à l'autre, par lesquelles la dimension du trou d'interconnexion (5a) est ajustable.

7. Climatiseur selon la revendication 6, dans lequel les parties (50a, 50b) qui sont déplaçables l'une par rapport à l'autre, sont déplaçables collectivement par un dispositif à déplacement, indépendant de leurs positions l'une par rapport à l'autre.

8. Climatiseur selon la revendication 4, dans lequel un volet de contrôle (9) est disposé au trou d'interconnexion (8), par lequel l'écoulement d'air venant de l'échangeur de chaleur (4) et entrant dans le conduit partiel (2b) est ajusté.

9. Climatiseur selon la revendication 8, dans lequel le volet de contrôle (9) est déplaçable, ou peut pivoter, dans le conduit partiel (2b) menant à la zone en arrière, de telle manière que la partie du conduit partiel (2b) bifurquant du conduit principal (2) en avant de l'échangeur de chaleur (4) est verrouillable par le volet de contrôle (9).
